# EUROPEAN PATENT SPECIFICATION

(11) **EP 4 239 977 B1**
(45) Date of publication and mention of the grant of the patent: **30.07.2025**
(21) Application number: 22382187.7
(22) Date of filing: 02.03.2022
(51) Int. Cl.: H04L 65/1069

(54) **METHODS OF INITIATING TELECOMMUNICATIONS SESSIONS AND DEVICES, SERVERS AND COMPUTER SOFTWARE FOR PERFORMING THE METHODS**
VERFAHREN ZUR EINLEITUNG VON TELEKOMMUNIKATIONSSITZUNGEN UND VORRICHTUNGEN, SERVERN UND COMPUTERSOFTWARE ZUM DURCHFÜHREN DER VERFAHREN
PROCÉDÉS PERMETTANT D'INITIER DES SESSIONS DE TÉLÉCOMMUNICATIONS ET DISPOSITIFS, SERVEURS ET LOGICIEL INFORMATIQUE POUR EFFECTUER LES PROCÉDÉS

(43) Date of publication of application: 06.09.2023
(73) Proprietor: Vodafone Group Services Limited, Newbury RG14 2FN (GB)
(72) Inventor: DOMÍNGUEZ GONZÁLEZ, Rafael, London, W2 6BY (GB); MARTÍNEZ PEREA, Rogelio, London, W2 6BY (GB); MANSO MORENO, Raquel, London, W2 6BY (GB)
(74) Representative: Boult Wade Tennant LLP

(56) References cited:
- US-A1- 2012 185 604

## Description

### Technical field

This application relates to methods, devices and servers for managing services provided for telecommunications sessions. More particularly, the application provides flexible methods for providing call services in which services may be provisioned for particular sessions.

### Background

Call services are usually provisioned by updating a home location register (HLR) and/or home subscriber server (HSS) to indicate which services should be enabled for a particular subscriber. Alternatively, provisioning can be done directly in an application server (AS). This is an inflexible system as the services need to be updated manually. Moreover, the call services are the same for every call made by the subscriber. This can be inefficient because every call for that subscriber is routed via the application server providing the call service, even if call services are not required for every call.

In existing Network as a Platform (NaaP) and Telecommunications as a Service (TaaS) approaches, services for fully provisioned customers may be triggered by the network.

EP3603042 describes linking a user account to a PBX extension by receiving an association request (comprising a PBX extension telephone number) from a user account, sending an association code to the user account, calling the PBX extension, receiving the activation code from the PBX extension (verifying that the user account and PBX extension belong to the same user) and linking the PBX extension and user account together.

US9215683 describes controlling multiple distinct identities of a mobile device across different forms of communication including telephone calls, short message service (SMS), personal and business voice mail, where each identity corresponds to a different phone number (e.g. for distinct business and personal identities). The system determines which identity of the mobile device to employ in response to detecting an inbound or outbound communication, based on in-band signaling that is provided along with the communication and/or an out-of-band signaling mechanism, such as a data channel.

However, call handling in prior art methods is broadly based on a preconfigured profiled for each subscriber. Services are not configurable for each session, which may be beneficial in certain cases. For example, a call recording service may be required by a subscriber only for certain calls. The telecommunications network has no way of determining which calls require the service and has no way of activating/deactivating the service on a call-by-call basis. The network must therefore assume that the service is required every time and route all the calls via the recording application server. This results in an inefficient system due to increased signalling requirements and increased resource use at the application server.

The present invention aims to address the drawbacks in the prior art.

US2012185604A1 describes a system and method of communicating callee device preferences to a network.

### Summary

The scope of the present invention is defined in the claims. A number of examples useful for understanding the invention (but not necessarily within the scope of the invention) are also provided below. Against the background described above, the present invention aims to provide an improved method in which session services are activated only for the specific session for which the services are required. According to the proposed methods, a user device may activate services on a per-session basis. In one example, the user device sends a message containing call preferences from their handset, before the call is initiated. The preferences are stored in a data store. Then the handset establishes the call. During call setup, the operator network retrieves the preferences from the database and dynamically provisions call services, based on the preferences. Advantageously, by sending the preferences before establishing the session, the operator network is able to deduce the required services for the call, without the user needing to specify any additional parameters in the signalling for the session itself.

According to a first aspect of the invention defined by independent claim 1, a method of initiating a telecommunications session in a telecommunications network is provided. The method comprises:
sending a first message from an originating party to a server, the first message comprising service preferences for a telecommunications session and one or more session parameters for identifying the telecommunications session; and
initiating the telecommunications session by sending a second message from the originating party to the telecommunications network,
wherein the service preferences are associated with the session parameters so that the telecommunications network is able to fulfil one or more services specified in the service preferences, based on the session parameters.

The second message (the message sent to the telecommunications network to initiate the telecommunications session) may comprise the one or more session parameters.

The method may further comprise receiving a substitute terminating party identifier from the server. The second message (the message sent to the telecommunications network to initiate the telecommunications session) may comprise updated session parameters comprising the substitute terminating party identifier.

In other words, the second message comprises updated session parameters, in which the terminating party identifier is replaced by the substitute terminating party identifier. The substitute terminating party identifier may also be referred to as a substitute terminating *subscriber* identifier.

The method may further comprise sending a message to a provisioning server. The message sent to the provisioning server may comprises authentication data for verifying an identify of one or more of:
an electronic device from which the message is sent;
a software application installed on the electronic device; and
a user operating the electronic device.

In some examples, the provisioning server may be a separate entity to the server to which the first message is sent or may be the same entity.

In some examples, the session parameters may comprise a label for identifying the telecommunications session. The method may comprise generating the label and the first message may comprise the label. Alternatively, the method may further comprise receiving the label in response to the first message. The second message may further comprise the label. The label may be linked to the service preferences so that the telecommunications network is able to fulfil one or more services specified in the service preferences, based on the label in the session parameters.

According to a second aspect of the invention defined by independent claim 13, an electronic device configured to perform the methods according to the first aspect is also provided. The electronic device may be a user equipment (UE).

According to a third aspect of the invention defined by independent claim 5, a method of initiating a telecommunications session in a telecommunications network is also provided. The method comprises:
receiving a first message from an originating party, the first message comprising service preferences for a telecommunications session and one or more session parameters for identifying the telecommunications session;
storing the service preferences and session parameters in a data store;
receiving a second message from the originating party initiating the telecommunications session;
determining service preferences for the telecommunications session by querying the data store; and
sending one or more messages to one or more corresponding application servers to fulfil one or more services specified in the service preferences.

In some examples, a data store may be a service comprising a database and one or more interfaces for accessing the database (writing to and reading from the database). The one or more interfaces may be accessible by the originating endpoint, and one or more network entities in the telecommunications network (such as a service management application server).

In some examples, sending one or more messages to one or more corresponding application servers to fulfil one or more services specified in the service preferences may comprise sending a message to a corresponding application server for each of the one or more services specified in the service preferences.

In some examples, the second message may comprise the session parameters.

In some examples, the session parameters may comprise a terminating party identifier. The method may further comprise sending a third message to the terminating party to initiate the session between the originating party and the terminating party.

Some examples can be useful in the originating and/or the terminating side of the session. Where the originating party is a subscriber of the network, services can be activated on the originating leg of the call. However, if the originating process of the session is not available (for example because the originating party is not a customer of the telecommunications network providing the services) some examples can be used on the terminating side of the call. For this case, the methods may be modified by replacing the terminating party with a substitute "service number" that is owned/managed by the telecommunications network providing the services.

The session parameters may comprise a terminating party identifier. The method may further comprise sending a substitute terminating party identifier to the originating party. The second message may comprise updated session parameters comprising the substitute terminating party identifier.

In some examples, storing the service preferences and session parameters in a data store may further comprise storing the updated session parameters in the data store.

The method may further comprise sending a third message to the terminating party to initiate the telecommunications session between the originating party and the terminating party.

In other words, the first message to the server comprises the service preferences and session parameters, which may comprise the terminating party identifier. The server may store the service preferences and session parameters (including the terminating party identifier) in a data store. The server may then send a substitute terminating party identifier to the originating party. The substitute terminating party may be a subscriber of the telecommunications network (e.g. a reserved number that is used to ensure call signalling is routed via the telecommunications network). When the call routing reaches an entity in the telecommunications network that is configured to determine the required services (e.g. the service management application server), the entity may determine the required services, based on the updated session parameters (comprising the substitute terminating party). The entity may send one or more messages to fulfil the required services. However, at this stage, the session is between the originating party and the substitute terminating party, rather than the terminating party. The entity may therefore also determine the terminating party (i.e. the party that the originating party intends to initiate a session to) from the session parameters in the data store and may set up the telecommunications session by sending a message to the terminating party.

In some examples, a method of initiating a telecommunications session may therefore comprise:
receiving a first message from an originating party, the first message comprising service preferences for a telecommunications session and one or more session parameters for identifying the telecommunications session;
sending a substitute terminating party identifier to the originating party;
storing the session parameters and service preferences in a data store;
receiving a second message comprising updated session parameters from the originating party initiating the telecommunications session, wherein the updated session parameters comprise the substitute terminating party identifier;
determining the service preferences for the telecommunications session and the terminating party identifier by querying the data store (e.g. using the updated session parameters);
sending one or more messages to one or more corresponding application servers to fulfil one or more services specified in the service preferences; and
sending a third message to the terminating party to initiate the telecommunications session between the originating party and the terminating party.

In some examples, storing the session parameters and service preferences in a data store may comprise storing service preferences, session parameters (comprising the terminating party identifier), and updated session parameters (comprising the substitute terminating party identifier) in the data store.

The session parameters may comprise an originating party identifier. The method may further comprise determining, based on the originating party identifier, whether the originating party is a subscriber of the telecommunications network or a subscriber of a different network.

If the originating party is a subscriber of a different network, the method may further comprise sending a substitute terminating party identifier to the originating party, as described above.

The method may further comprise receiving a provisioning message from the originating party.

The provisioning message may comprise data for authenticating one or more of:
an electronic device from which the message is sent,
a software application installed on the electronic device, and
a user operating the electronic device.

The method may further comprise verifying the electronic device, software application or user, based on the authentication data.

The second message may be received by a service management application server configured to perform the steps of:
receiving the second message,
determining service preferences, and
sending one or more messages to one or more corresponding application servers to fulfil one or more services specified in the service preferences.

The method may further comprise sending a message to a subscriber management server in the telecommunications network, preferably a Home Subscriber Server, HSS, or Home Location Register, HLR, to indicate that signalling for telecommunications sessions initiated by the originating party should be routed via the service management application server.

There are several possible ways to configure the telecommunications network so that session signalling for a particular subscriber (e.g. the originating or terminating party) is routed through the service management application server. In some examples, the provisioning server (ACS) may directly send a message to the HSS and/or HLR. However, in many other examples, the messages will go through a provisioning stack of the telecommunications network (IT layer) that needs to be aware of provisioning services.

In some examples, the session parameters may comprise a label for identifying the telecommunications session. The first message may comprise the label. Alternatively, the method may further comprise generating the label and sending the label to the originating party.

In some examples, storing the service preferences and session parameters in a data store may comprise storing the service preferences in association with the label.

In some examples, the second message may further comprise the label (e.g. the session parameters or the updated session parameters comprise the label). Querying the data store to determine service preferences may comprise querying the data store using the label.

According to a fourth aspect of the invention defined by independent claim 14, a server configured to perform any of the methods according to the third aspect above is also provided.

The first message may be sent via a first communication protocol, which is preferably a web services protocol such as Hypertext Transfer Protocol, HTTP or Hypertext Transfer Protocol Secure, HTTPS. The second message may be sent via a second communication protocol that is different to the first communication protocol. The second communication protocol is preferably a signalling protocol, such as Session Initiation Protocol, SIP.

In some examples, sending the first message comprising service preferences to the server may comprise sending a web services message to the server via a web services interface, such as http or https.

The session parameters may comprise one or more of:
an originating party identifier, such as an MSISDN, IMSI and/or IMEI;
a terminating party identifier, such as an MSISDN, IMSI and/or IMEI;
time and/or date information; and
location data.

In some examples, location data may be determined from a GPS location or a cell-ID).

In some examples, the session parameters may comprise one or more of:
the service preferences; and
identifying data from an application running on the mobile device (the application on the mobile device that sends the first message). The identifying data may comprise OS data, build parameters, application, application version, user-agent, and the like.

The originating party and terminating party may be referred to an originating endpoint and a terminating endpoint or an originating subscriber and a terminating subscriber.

According to a fifth aspect of the invention defined by independent claim 15, a computer software is also provided. The computer software comprises instructions that, when executed on a processor of a computer, cause the computer to perform any of the methods described above.

Further embodiments are set out in the dependent claims.

In some examples, a method performed by a network entity (such as a service management application server) is also provided. The method comprises receiving a second message from an originating party initiating a telecommunications session. The second message comprises session parameters. The method further comprises determining service preferences for the telecommunications session by querying a data store. The method further comprises sending one or more messages to one or more corresponding application servers to fulfil one or more services specified in the service preferences.

As will be appreciated by the skilled person, optional steps described above may be performed by the network entity in some examples.

According to some examples, a network entity configured to perform the method is also provided.

According to some examples, a method performed by a server (such as a web server or data store) is also provided. The method comprises receiving a first message from an originating party, the first message comprising service preferences for a telecommunications session and one or more session parameters for identifying the telecommunications session. The method further comprises storing the service preferences and session parameters (e.g. in a database). The method further comprises receiving, from a network entity (e.g. as described above), a query comprising the session parameters. The method further comprises sending the service preferences stored in association with the session parameters to the network entity.

As will be appreciated by the skilled person, optional steps described above may be performed by the server in some examples.

According to some examples, a server configured to perform the method is also provided.

### Brief description of the drawings

Figure 1 illustrates a system architecture according to a specific example.
Figure 2 illustrates a flow diagram for an example provisioning messaging flow.
Figure 3 illustrates a flow diagram for initiating a telecommunications session by a mobile device.
Figure 4 illustrates a flow diagram of a further example method.

### Detailed description

In existing arrangements, the provision of services may consist of invoking the relevant IT stack for the user. Such arrangements may have several drawbacks. Firstly, services cannot be configured in real time. Secondly, every change needs to be developed not only on the network but also on the IT side (and therefore takes time and resources to action). Thirdly, the client needs to be owned by the operator.

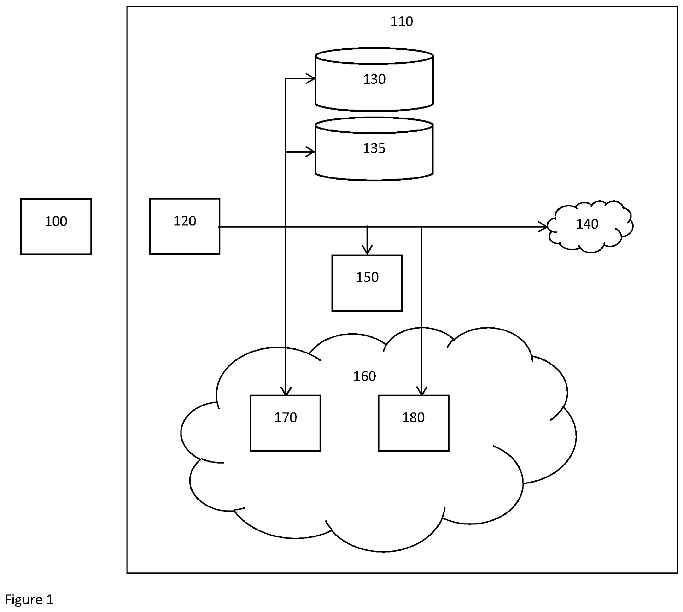

Figure 1 illustrates a system architecture according to a specific example. An originating party 100 (such as a mobile device or user equipment) initiates a telecommunications session via a telecommunications network 110. The telecommunications network 110 comprises the following components:
An AutoConfiguration Server (ACS) 120;
A Home Location Register (HLR) 130 and/or a Home Subscriber Service (HSS) 135;
IT Systems 140;
A database 150;
An IP Multimedia Subsystem IMS 160;
A service management application server 170, which may also be called a "Context Aware Originating Services Application Server" or "CAOS AS"; and
One or more Application Servers 180 (which may be generic service application servers).

In the following specific examples that illustrate the proposed methods, the proposed solution may involve:
identifying the user (and its specific device: handset + SIM) in the telecommunication system and authenticate and authorize the user;
provisioning the user (if needed); and
executing the service logic and checking whether conditions to trigger the services are met.

Two specific options for executing the service are described below: a direct option (OPTION A) and an option involving a rerouting (OPTION B).

### OPTION A

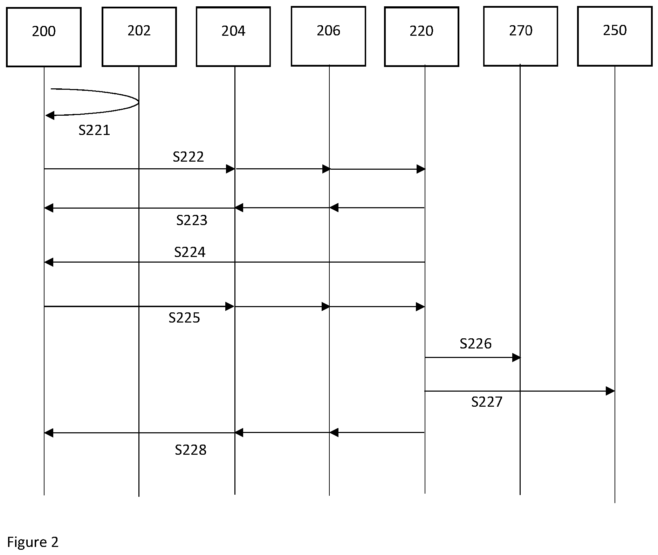

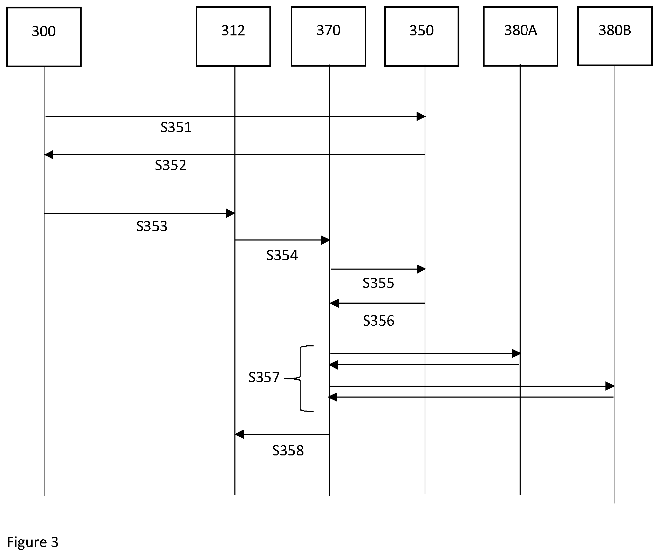

In the flow diagrams illustrated in Figures 2 and 3, an example of the provisioning method and different use cases to execute a service are provided.

Figure 2 illustrates a flow diagram for an example provisioning messaging flow. At step S221, mobile device 200 downloads an application from an online application repository 202 (such as the Apple App store (RTM) or the Google Play store (RTM)).

At step S222, the mobile device 200 sends a message to a provisioning server 220 in the telecommunications network (such as an AutoConfiguration server, ACS). In the example illustrated, the message is sent from the mobile device 200 to a gateway 204 (such as a Wireless Access Point Gateway WAP-GW). Then, the gateway sends the message to a proxy server 206 (such as a proxy XML configuration access protocol server, Proxy XCAP). The proxy server 206 sends the message to the provisioning server 220. The message may be an HTTPS request comprising an application ID and/or a registration ID (such as a Google Cloud Messaging Registration ID, GCM RegID). The message may further comprise a subscriber identifier, such as an International Mobile Equipment Identity (IMEI), International Mobile Subscriber Identifier (IMSI) or Mobile Station International Subscriber Directory Number (MSISDN).

As step S223, the provisioning server 220 may send a message to the mobile device 200. The message may comprise an identifier, such as a cookie. The response message may be sent via the proxy server 206 and the gateway 204.

At step S224, the provisioning server 220 sends a message to the mobile device 200. The message may be a short messaging service message (SMS). The message may comprise a one time password (OTP).

At step S225, the mobile device 200 sends a message to the provisioning server 220. The message may be an HTTPS request comprising the OTP and/or the identifier (e.g. the cookie). The message may be sent via the gateway 204 and the proxy server 206.

At step S226, the provisioning server 220 sends a message to a service management application server 270. The message may configure the service management application server 270 to fulfil services for the mobile device 200. The provisioning server 220 may also send a message to the HSS and/or the HLR, so that signalling for sessions initiated by the mobile device are routed via the service management application server 270. The provisioning server 220 may also send one or more messages to one or more application servers to configure these application servers to provide one or more services for the mobile device 200.

At step S227, the provisioning server sends a message to a data store 250 (or a database).

At step S228, the provisioning server sends a message to the mobile device 200. The message may comprise configuration data (such as XML configuration data). The message may be sent via the proxy server 206 and the gateway 204.

The provision of the service / application is implementation specific. The authentication server (which may be an RCS authentication server, RCC14 device configuration server or similar) provides the following services:
authenticate the application, device and user;
authorize the user for the provisioning; and
trigger the provision.

As described above, the provisioning server may also send a message to a HSS and/or HLR. This message may configure a profile of the mobile device so that signalling for sessions involving the mobile device is routed through the service management application server 270. The subscriber identifier (e.g. MSISDN, IMEI or IMSI) sent to the provisioning server in step S222 may be used to identify a profile of the subscriber associated with the mobile device 200 in the HSS and/or HLR.

This provisioning method may further comprise provisioning service-specific application servers. This step may be needed if calls are not currently routed through the application servers. This step may be performed as part of provisioning rich communication services (RCS).

Once provisioning is complete, relevant information about the status of the request and other relevant information may be sent back to the application on the mobile device 200.

Figure 3 illustrates a flow diagram for initiating a telecommunications session by a mobile device. For example, this flow may illustrate the process for placing a call, where a call service is provided by an application server.

At step S351, mobile device 300 sends a message (such as a webservices message) to a server 350. The message may be sent from the mobile device by an application on the mobile device 300. The server 350 may be a data store or database. The message comprises service preferences for the telecommunications session and one or more session parameters for identifying the telecommunications session with the relevant information to uniquely identify the call. For example, the message may comprise an identifier of the originating party (e.g. the MSISDN of the mobile device), an identifier of a terminating party of the call (e.g. the MSISDN of the called party), and an indication that SERVICE A and SERVICE C are required for the telecommunications session.

At step S352, server 350 sends a message to the mobile device. The message may be a 200 OK response. The message may comprise a timeout parameter.

At step S353, mobile device 300 sends a message to the telecommunications network to initiate a telecommunications session. The message may be a SIP INVITE. The message may be sent to a Call Session Control Function (CSCF) 312 of the telecommunications network.

The message that the mobile device sends to the telecommunications network (to initiate the telecommunications session with the terminating party) may be sent in a standard manner, without any special features on the (SIP) message itself.

At step S354, the CSCF sends a message to the service management application server 370. The service management application server 370 may be included in the signalling path due to the configuration of the HSS and/or HLR profile for the originating party.

After the service management application server 370 receives the message, the service management application server 370 sends a query to the data store 350 at step S355. The query may comprise one or more session parameters for identifying the telecommunications session. For example, the query may comprise an originating party identifier and a terminating party identifier (e.g. originating party MSISDN and terminating party MSISDN).

At step S356, the data store determines whether services are required for the telecommunications session (based on the one or more session parameters for identifying the telecommunications session). If the data store determines that services preferences for the telecommunications session have been provided by the mobile device (e.g. in step S351), the data store returns the service preferences for the telecommunications session. For example, the data store may respond to the query by sending a message to the service management application server 370 indicating that SERVICE A and SERVICE C are required for the telecommunications session. The message may be a 200 OK response.

If the data store query returns one or more services to be executed, the data store 350 may create a record marking the service as executed in the database (in order to not repeat a service already executed).

At step S357, the service management application server 370 fulfils the required service(s), by sending one or more messages to one or more application servers 380A and 380B. The different services may be fulfilled by different application servers or may be fulfilled by the same application server.

To fulfil the services, the service management application server 370 may send a SIP INVITE to the one or more application servers 380A and 380B. The one or more application servers 380A and 380B may each send a SIP INVITE back to the service management application server 370.

If there are no services to be executed on the database, the action can be configurable: continue the call, connect the call to an announcement, release the call, etc.

When the services are executed, the service management application server 370 sends a message to the CSCF 312 at step S358. In this way, the CSCF may continue executing any further services defined in the HSS and/or HLR.

The message sent from the service management application server 370 to the CSCF 312 may comprise the same ODI as the original message (the message sent to the service management application server 370 in step S354).

Services can be invoked on behalf of either the originating or terminating party, depending on which party is a subscriber of the telecommunications network. However, in order for the services to be fulfilled, either the originating party or the terminating party (or both) must be a subscriber of the telecommunications network. Therefore, the originating and/or terminating party may be provisioned before initiating the telecommunications session (so that one of the parties is already a customer of the telecommunications network).

### OPTION B

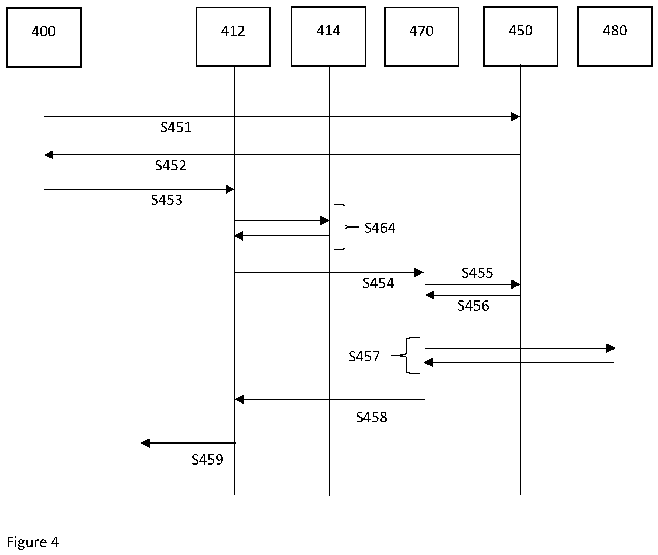

Figure 4 illustrates a flow diagram of a further example method in which services may be fulfilled even if neither the originating party nor the terminating party is a subscriber of the telecommunications network.

With this method, it is possible to serve originating services to a user that is not a customer of the telecommunications network. The flow is based on similar interactions to those illustrated in Figure 3. The provisioning process is similar to the process illustrated in Figure 2. However, there is no need to provision the user in HSS / HLR (and it is not possible to do so because the user is not a customer of the telecommunications network).

In this example, the user/app does not make the call directly to the terminating party. Rather, at step S451, the user device 400 sends a message to the data store 450 comprising one or more services to apply (service preferences) and relevant information for identifying the call (session parameters). The session parameters comprise the terminating party identifier (B party). The one or more session parameters may further comprise an originating party identifier (A party), location data, device data (such as IMSI, IMEI, device model), and the like. The data (service preferences and session parameters) is stored by the data store 450. The message may be an HTTPS request. One example can be: User A has sent the following data; MSISDN of originating party, MSISDN of terminating party, CALL RECORDING, cell-id.

At step S452, the data store sends a message in response to the request, where the response comprises a substitute terminating party identifier (new B party). The response may be a 200 OK response. The substitute terminating party is a subscriber that is managed by the telecommunications network providing the services. In this way, the method ensure that the signalling for the session is routed via the telecommunications network providing the services.

At step S453, the mobile device uses the substitute terminating party identifier to initiate the session (e.g. by making a regular voice call to this number). The mobile device 400 initiates the session by sending a message to the telecommunications network, the message comprising updated session parameters, in which the terminating party identifier is swapped for the substitute terminating party identifier. Depending on whether the user is a customer of the telecommunications network or not, direct routing may be implemented or the routing will first be handled by a different network. If the mobile device is not a customer of the telecommunications network that is providing the services, the message will first be routed via their own telecommunications network (the network of which they are a customer). Then, the signalling is routed to the telecommunications network that manages the substitute terminating party. Either way, the signalling arrives at the telecommunications network that is providing the services. For example, the message may be a SIP INVITE. The message may arrive at the CSCF 412 of the telecommunications network.

The substitute terminating party is a subscriber that is managed by the telecommunications network providing the services. There are a number of ways in which the substitute terminating party identifier may be determined. One option is to use a rerouting range, with dynamic allocation. For this option, a fixed range with predefined routing is used to perform this service. In step S452, the data store 450 allocates a single number in the rerouting range to the call. For example, the range +34600190XXX may be reserved specifically for this purpose. Then, the specific number within the range, "XXX" may be used as a key to recover the data that is returned to the service management application server 470 in step S456 (including the service preference data and the terminating party identifier).

This substitute terminating party (new B party) may be managed by the data store, to ensure that it is uniquely allocated at any given time. For example, one substitute identifier may be allocated to an originating party and the substitute identifier would then be reserved until a session has been detected by the network that is addressed to the substitute terminating party. At this stage, the network would use the substitute identifier as a key top recover the data from the data store. Then the data store may mark that identifier as being available for use again.

A second option is to use the context itself as the key to recover the preferences (and the terminating party) from the database. In this case, the lookup can be more complicated: for example, the A party, timestamp and location data may be used to uniquely identify the data relating to the session and recover the service preference data that is returned to the service management application server 470 in step S456. This option may result in difficulty when looking for consecutive calls from the same origin. To address this issue, the one or more session parameters used to identify the session can be enriched with an additional SIP header from the originating party (a label to identify the session).

At step S464, the CSCF 412 performs the usual processing for a session terminating at the telecommunications network. For example, the CSCF 412 may send a message to one or more servers responsible for one or more terminating triggers 414. The one or more servers 414 may then send a message back to the CSCF 412. The messages between the CSCF 412 and the one or more servers responsible for one or more terminating triggers 414 may be SIP INVITES.

The substitute terminating party (new B party) will be already provisioned and configured so that signalling is routed to the service management application server 470. This can be performed individually for the substitute identifiers or using a range or PSI. At step S454, the CSCF 412 sends a message to the service management application server 470. The message may be a SIP INVITE.

At step S455, the service management application server 470 sends a message to the data store 450 to determine what services are required for the session. The message may comprise updated session parameters for identifying the session. The updated session parameters may comprise the substitute terminating party identifier. The message may further comprise the originating party identifier and/or other session parameters used to identify the session. The message may be a SIP INVITE.

The data store may use the updated session parameters to retrieve the information that the user / app provided in step S451 (including the service preferences and the terminating party identifier). Then in step S456, the data store sends a message to the service management application server 470 comprising the service preferences.

At step S457, the service management application server 470 will fulfil the service preferences and apply the specific logic for the call. This may comprise sending one or more messages to one or more application servers 480 to fulfil the required services. For example, the service management application server 470 may send a SIP INVITE to one or more application servers 480 and receive a SIP INVITE in response once the one or more services have been activated for the session.

When the services are executed, the service management application server 470 sends a message to the CSCF 412 at step S458.

At step S459, the session signalling is routed onwards towards the final destination (the terminating party).

In this way, the service management application server 470 retrieves the required information from the data store 450, invokes the required services (e.g. a call recording service) and routes the call to the B party (routing can be also influenced by other data it may hold, for example if it's also a provisioned user or not).

### Alternatives

For simplicity, the above examples illustrate scenarios where the services are provided by one or two application servers. However, there may be a plurality of different application servers. Multiple application servers may be provided for redundancy or load balancing. The application servers may be provided to provide services for different groups of users. The application servers may be configured to each provide different services.

The messages illustrated in the flow diagrams and steps described in relation to the methods are not intended to provide a comprehensive list of all messages. Additional steps or messages may be exchanged between the method steps described. For example, a SIP client may send a "100 Trying" and/or a "180 Ringing" message after receiving an "INVITE" but before sending a "200 OK". This may indicate that the request is being processed or that a user device is ringing.

The term "endpoint" has been used to refer to signalling and media destinations. These may alternatively be referred to as "terminals". They may also be described as devices or "subscribers" that may have an "address", "number" or "identifier".

An "address" could include a SIP signalling address (e.g. the "from" field in a SIP message). Alternatively, an "address" could be a "media address". A "media address" refers to an address to which session media is sent, once a session has been established (e.g. an SDP media address of an endpoint).

Whilst the above specific examples refer to "calls", the proposed signalling method may be used to establish different types of session between endpoints. These may include:
- voice calls;
- non-voice calls;
- video calls;
- video and voice calls;
- messaging;
- gaming;
- and the like.

The endpoints/parties (A party, B party, substitute/new B party) may be UEs in a 3GPP+ network. As described above, these may be one or more mobile telephones, such as a smartphone. However, this is not essential. Signalling (such as SIP) may be used to establish a connection but the actual endpoint device could be a legacy device connected to the "plain old telephone service", POTS, for example.

## Claims

1. A method of initiating a telecommunications session in a telecommunications network, the method comprising:
sending (S351, S451) a first message from an originating party (100) to a server (150), the first message comprising service preferences for a telecommunications session and one or more session parameters for identifying the telecommunications session; and
initiating the telecommunications session by sending (S353, S453) a second message from the originating party (100) to the telecommunications network (110),
wherein the service preferences are associated with the session parameters so that the telecommunications network (110) is able to fulfil one or more services specified in the service preferences, based on the session parameters.

2. The method of claim 1, wherein the second message comprises the one or more session parameters.

3. The method of claim 1 or claim 2, further comprising receiving a substitute terminating party identifier from the server (150), wherein the second message comprises updated session parameters comprising the substitute terminating party identifier.

4. The method of any preceding claim, wherein the method further comprises sending a message to a provisioning server (120), wherein the message comprises authentication data for verifying an identify of one or more of:
an electronic device from which the message is sent;
a software application installed on the electronic device; and
a user operating the electronic device.

5. A method of initiating a telecommunications session in a telecommunications network, the method comprising:
receiving (S351, S451) a first message from an originating party (100), the first message comprising service preferences for a telecommunications session and one or more session parameters for identifying the telecommunications session;
storing the service preferences and session parameters in a data store (150); receiving a second message from the originating party (100) initiating the telecommunications session;
determining service preferences for the telecommunications session by querying the data store (150); and
sending one or more messages to one or more corresponding application servers (480) to fulfil one or more services specified in the service preferences.

6. The method of claim 5:
wherein the second message comprises the session parameters; or
wherein the session parameters comprise a terminating party identifier, wherein the method further comprises sending a substitute terminating party identifier to the originating party, wherein the second message comprises updated session parameters comprising the substitute terminating party identifier.

7. The method of claim 6, wherein the session parameters comprise a terminating party identifier, wherein the method further comprises sending a third message to the terminating party to initiate the session between the originating party and the terminating party.

8. The method of any of claims 5 to 7, wherein the session parameters comprise an originating party identifier, wherein the method further comprises:
based on the originating party identifier, determining whether the originating party is a subscriber of the telecommunications network or a subscriber of a different network;
if the originating party is a subscriber of a different network, sending a substitute terminating party identifier to the originating party.

9. The method of any of claims 5 to 8, further comprising receiving a provisioning message from the originating party, wherein the provisioning message comprises data for authenticating one or more of:
an electronic device from which the message is sent,
a software application installed on the electronic device, and
a user operating the electronic device,
wherein the method further comprises verifying the electronic device, software application or user, based on the authentication data.

10. The method of claim 9, wherein the second message is received by a service management application server (170) configured to perform the steps of receiving the second message, determining service preferences and sending one or more messages to one or more corresponding application servers (180) to fulfil one or more services specified in the service preferences, wherein the method further comprises:
sending a message to a subscriber management server in the telecommunications network, preferably a Home Subscriber Server, HSS, or Home Location Register, HLR, (135) to indicate that signalling for telecommunications sessions initiated by the originating party (100) should be routed via the service management application server (170).

11. The method of any preceding claim, wherein the first message is sent via a first communication protocol, preferably a web services protocol such as Hypertext Transfer Protocol, HTTP or Hypertext Transfer Protocol Secure, HTTPS, and wherein the second message is sent via a second communication protocol that is different to the first communication protocol, preferably a signalling protocol such as Session Initiation Protocol, SIP.

12. The method of any preceding claim, wherein the session parameters comprise one or more of:
an originating party identifier, such as an Mobile Station International Subscriber Directory Number, MSISDN, International Mobile Subscriber Identifier, IMSI, and/or International Mobile Equipment Identity, IMEI;
a terminating party identifier, such as an MSISDN, IMSI and/or IMEI;
time and/or date information; and
location data.

13. An electronic device (100) configured to perform the method of any of claims 1 to 4, 11 or 12, insofar as claims 11 or 12 are dependent on any of claims 1 to 4.

14. A server configured to perform the method of any of claims 5 to 10, 11 or 12, insofar as claims 11 or 12 are dependent on any of claims 5 to 10.

15. Computer software comprising instructions that, when executed on a processor of a computer, cause the computer to perform the method of any of claims 1 to 4, 11 or 12, insofar as claims 11 or 12 are dependent on any of claims 1 to 4, or the method of any of claims 5 to 10, 11 or 12, insofar as claims 11 or 12 are dependent on any of claims 5 to 10.

## Patentansprüche

1. Verfahren zum Einleiten einer Telekommunikationssitzung in einem Telekommunikationsnetz, wobei das Verfahren umfasst:
Senden (S351, S451) einer ersten Nachricht von einem Ursprungsteilnehmer (100) an einen Server (150), wobei die erste Nachricht Diensteinstellungen für eine Telekommunikationssitzung und einen oder mehrere Sitzungsparameter zum Identifizieren der Telekommunikationssitzung umfasst; und
Einleiten der Telekommunikationssitzung, indem eine zweite Nachricht von dem Ursprungsteilnehmer (100) an das Telekommunikationsnetz (110) gesendet wird (S353, S453),
wobei die Diensteinstellungen mit den Sitzungsparametern verknüpft sind, sodass das Telekommunikationsnetz (110) auf Basis der Sitzungsparameter einen oder mehrere Dienste ausführen kann, die in den Diensteinstellungen angegeben sind.

2. Verfahren nach Anspruch 1, wobei die zweite Nachricht den einen oder die mehreren Sitzungsparameter umfasst.

3. Verfahren nach Anspruch 1 oder Anspruch 2, ferner umfassend das Empfangen einer Endteilnehmerersatzkennung von dem Server (150), wobei die zweite Nachricht aktualisierte Sitzungsparameter umfassend die Endteilnehmerersatzkennung umfasst.

4. Verfahren nach einem vorstehenden Anspruch, wobei das Verfahren ferner das Senden einer Nachricht an einen Bereitstellungsserver (120) umfasst, wobei die Nachricht Authentifizierungsdaten zum Überprüfen einer Identität eines oder mehrerer umfasst von:
einer elektronischen Vorrichtung, von der die Nachricht gesendet wurde;
einer Softwareanwendung, die auf der elektronischen Vorrichtung installiert ist; und
einem Benutzer, der die elektronische Vorrichtung betreibt.

5. Verfahren zum Einleiten einer Telekommunikationssitzung in einem Telekommunikationsnetz, wobei das Verfahren umfasst:
Empfangen (S351, S451) einer ersten Nachricht von einem Ursprungsteilnehmer (100), wobei die erste Nachricht Diensteinstellungen für eine Telekommunikationssitzung und einen oder mehrere Sitzungsparameter zum Identifizieren der Telekommunikationssitzung umfasst;
Speichern der Diensteinstellungen und Sitzungsparameter in einem Datenspeicher (150);
Empfangen einer zweiten Nachricht von dem Ursprungsteilnehmer (100), durch die die Telekommunikationssitzung eingeleitet wird;
Bestimmen von Diensteinstellungen für die Telekommunikationssitzung, indem der Datenspeicher (150) abgefragt wird; und
Senden einer oder mehrerer Nachrichten an einen oder mehrere entsprechende Anwendungsserver (480), um einen oder mehrere Dienste auszuführen, die in den Diensteinstellungen angegeben sind.

6. Verfahren nach Anspruch 5:
wobei die zweite Nachricht die Sitzungsparameter umfasst; oder
wobei die Sitzungsparameter eine Endteilnehmerkennung umfassen, wobei das Verfahren ferner das Senden einer Endteilnehmerersatzkennung an den Ursprungsteilnehmer umfasst, wobei die zweite Nachricht aktualisierte Sitzungsparameter umfassend die Endteilnehmerersatzkennung umfasst.

7. Verfahren nach Anspruch 6, wobei die Sitzungsparameter eine Endteilnehmerkennung umfassen, wobei das Verfahren ferner das Senden einer dritten Nachricht an den Endteilnehmer umfasst, um die Sitzung zwischen dem Ursprungsteilnehmer und dem Endteilnehmer einzuleiten.

8. Verfahren nach einem der Ansprüche 5 bis 7, wobei die Sitzungsparameter eine Ursprungsteilnehmerkennung umfassen, wobei das Verfahren ferner umfasst:
Bestimmen, auf Basis der Ursprungsteilnehmerkennung, ob der Ursprungsteilnehmer ein Teilnehmer des Telekommunikationsnetzes oder ein Teilnehmer eines anderen Netzes ist;
wenn der Ursprungsteilnehmer ein Teilnehmer eines anderen Netzes ist, Senden einer Endteilnehmerersatzkennung an den Ursprungsteilnehmer.

9. Verfahren nach einem der Ansprüche 5 bis 8, ferner umfassend das Empfangen einer Bereitstellungsnachricht von dem Ursprungsteilnehmer, wobei die Bereitstellungsnachricht Daten zur Authentifizierung eines oder mehrerer umfasst von:
einer elektronischen Vorrichtung, von der die Nachricht gesendet wurde,
einer Softwareanwendung, die auf der elektronischen Vorrichtung installiert ist, und
einem Benutzer, der die elektronische Vorrichtung betreibt,
wobei das Verfahren ferner das Überprüfen der elektronischen Vorrichtung, der Softwareanwendung oder des Benutzers auf Basis der Authentifizierungsdaten umfasst.

10. Verfahren nach Anspruch 9, wobei die zweite Nachricht durch einen Dienstverwaltungsanwendungsserver (170) empfangen wird, der konfiguriert ist zum Durchführen der Schritte des Empfangens der zweiten Nachricht, Bestimmens von Diensteinstellungen und Sendens einer oder mehrerer Nachrichten an einen oder mehrere entsprechende Anwendungsserver (180), um einen oder mehrere Dienste auszuführen, die in den Diensteinstellungen angegeben sind, wobei das Verfahren ferner umfasst:
Senden einer Nachricht an einen Teilnehmerverwaltungsserver in dem Telekommunikationsnetz, vorzugsweise einen Heimatteilnehmerserver (Home Subscriber Server, HSS) oder ein Heimatstandortregister (Home Location Register, HLR) (135), um anzugeben, dass die Signale für die durch den Ursprungsteilnehmer (100) eingeleiteten Telekommunikationssitzungen über den Dienstverwaltungsanwendungsserver (170) geleitet werden sollen.

11. Verfahren nach einem vorstehenden Anspruch, wobei die erste Nachricht über ein erstes Kommunikationsprotokoll gesendet wird, vorzugsweise ein Webdienstprotokoll wie HyperText Transfer Protocol (HTTP) oder Hypertext Transfer Protocol Secure (HTTPS), und wobei die zweite Nachricht über ein zweites Kommunikationsprotokoll gesendet wird, das sich von dem ersten Kommunikationsprotokoll unterscheidet, vorzugsweise ein Signalisierungsprotokoll wie Session Initiation Protocol (SIP).

12. Verfahren nach einem vorstehenden Anspruch, wobei die Sitzungsparameter eines oder mehrere umfassen von:
einer Ursprungsteilnehmerkennung, z. B. einer internationalen Teilnehmerverzeichnisnummer für Mobilstationen (Mobile Station International Subscriber Directory Number, MSISDN), einer internationalen Mobilfunkteilnehmerkennung (International Mobile Subscriber Identity, IMSI) und/oder einer internationalen Mobilausrüstungsidentität (International Mobile Equipment Identity, IMEI);
einer Endteilnehmerkennung, z. B. einer MSISDN, IMSI und/oder IMEI;
Zeit- und/oder Datumsinformationen; und
Standortdaten.

13. Elektronische Vorrichtung (100), konfiguriert zum Durchführen des Verfahrens nach einem der Ansprüche 1 bis 4, 11 oder 12, sofern die Ansprüche 11 oder 12 von einem der Ansprüche 1 bis 4 abhängig sind.

14. Server, konfiguriert zum Durchführen des Verfahrens nach einem der Ansprüche 5 bis 10, 11 oder 12, sofern die Ansprüche 11 oder 12 von einem der Ansprüche 5 bis 10 abhängig sind.

15. Computersoftware umfassend Anweisungen, die bei Ausführung auf einer Verarbeitungseinheit eines Computers veranlassen, dass der Computer das Verfahren nach den Ansprüchen 1 bis 4, 11 oder 12 ausführt, sofern die Ansprüche 11 oder 12 von einem der Ansprüche 1 bis 4 abhängig sind, oder das Verfahren nach einem der Ansprüche 5 bis 10, 11 oder 12, sofern die Ansprüche 11 oder 12 von einem der Ansprüche 5 bis 10 abhängig sind.

## Revendications

1. Procédé d'ouverture d'une session de télécommunications dans un réseau de télécommunications, le procédé comprenant :
l'envoi (S351, S451) d'un premier message d'une partie d'origine (100) à un serveur (150), le premier message comprenant des préférences de service pour une session de télécommunications et un ou plusieurs paramètres de session pour identifier la session de télécommunications ; et
l'ouverture de la session de télécommunications par envoi (S353, S453) d'un deuxième message de la partie d'origine (100) au réseau de télécommunications (110),
dans lequel les préférences de service sont associées aux paramètres de session de sorte que le réseau de télécommunications (110) est capable de fournir un ou plusieurs services spécifiés dans les préférences de service, sur la base des paramètres de session.

2. Procédé selon la revendication 1, dans lequel le deuxième message comprend les un ou plusieurs paramètres de session.

3. Procédé selon la revendication 1 ou la revendication 2, comprenant en outre la réception d'un identifiant de partie finale de substitution à partir du serveur (150), dans lequel le deuxième message comprend des paramètres de sessions actualisés comprenant l'identifiant de partie finale de substitution.

4. Procédé selon l'une quelconque des revendications précédentes, dans lequel le procédé comprend en outre l'envoi d'un message à un serveur de provisionnement (120), dans lequel le message comprend des données d'authentification pour vérifier une identité d'un ou de plusieurs parmi :
un dispositif électronique à partir duquel le message est envoyé ;
une application logicielle installée sur le dispositif électronique ; et
un utilisateur actionnant le dispositif électronique.

5. Procédé d'ouverture d'une session de télécommunications dans un réseau de télécommunications, le procédé comprenant :
la réception (S351, S451) d'un premier message à partir d'une partie d'origine (100), le premier message comprenant des préférences de service pour une session de télécommunications et un ou plusieurs paramètres de session pour identifier la session de télécommunications ;
le stockage des préférences de service et des paramètres de session dans un magasin de données (150) ;
la réception d'un deuxième message à partir de la partie d'origine (100) ouvrant la session de télécommunications ;
la détermination de préférences de service pour la session de télécommunications par interrogation du magasin de données (150) ; et
l'envoi d'un ou de plusieurs messages à un ou plusieurs serveurs d'application (480) correspondants pour fournir un ou plusieurs services spécifiés dans les préférences de service.

6. Procédé selon la revendication 5 :
dans lequel le deuxième message comprend les paramètres de session ; ou
dans lequel les paramètres de session comprennent un identifiant de partie finale, dans lequel le procédé comprend en outre l'envoi d'un identifiant de partie finale de substitution à la partie d'origine, dans lequel le deuxième message comprend des paramètres de session actualisés comprenant l'identifiant de partie finale de substitution.

7. Procédé selon la revendication 6, dans lequel les paramètres de session comprennent un identifiant de partie finale, dans lequel le procédé comprend en outre l'envoi d'un troisième message à la partie finale pour ouvrir la session entre la partie d'origine et la partie finale.

8. Procédé selon l'une quelconque des revendications 5 à 7, dans lequel les paramètres de session comprennent un identifiant de partie d'origine, dans lequel le procédé comprend en outre :
sur la base de l'identifiant de partie d'origine, la détermination du fait que la partie d'origine est un abonné du réseau de télécommunications ou un abonné d'un réseau différent ;
si la partie d'origine est un abonné d'un réseau différent, l'envoi d'un identifiant de partie finale de substitution à la partie d'origine.

9. Procédé selon l'une quelconque des revendications 5 à 8, comprenant en outre la réception d'un message de provisionnement à partir de la partie d'origine, dans lequel le message de provisionnement comprend des données pour authentifier un ou plusieurs parmi :
un dispositif électronique à partir duquel le message est envoyé,
une application logicielle installée sur le dispositif électronique, et
un utilisateur actionnant le dispositif électronique,
dans lequel le procédé comprend en outre la vérification du dispositif électronique, de l'application logicielle ou de l'utilisateur, sur la base des données d'authentification.

10. Procédé selon la revendication 9, dans lequel le deuxième message est reçu par un serveur d'application de gestion de service (170) configuré pour réaliser les étapes consistant à recevoir le deuxième message, déterminer des préférences de service et envoyer un ou plusieurs messages à un ou plusieurs serveurs d'application (180) correspondants pour fournir un ou plusieurs services spécifiés dans les préférences de service, dans lequel le procédé comprend en outre :
l'envoi d'un message à un serveur de gestion d'abonné dans le réseau de télécommunications, de préférence un serveur d'abonné domestique, HSS, ou un enregistreur de localisation nominal, HLR, (135) pour indiquer qu'une signalisation pour des sessions de télécommunications ouvertes par la partie d'origine (100) doit être routée via le serveur d'application de gestion de service (170).

11. Procédé selon l'une quelconque des revendications précédentes, dans lequel le premier message est envoyé via un premier protocole de communication, de préférence un protocole de services Web tel que le protocole de transfert hypertexte, http, ou le protocole de transfert hypertexte sécurisé, HTTPS, et dans lequel le deuxième message est envoyé via un deuxième protocole de communication qui est différent du premier protocole de communication, de préférence un protocole de signalisation tel que le protocole d'ouverture de session, SIP.

12. Procédé selon l'une quelconque des revendications précédentes, dans lequel les paramètres de session comprennent un ou plusieurs parmi :
un identifiant de partie d'origine, tel qu'un numéro de réseau numérique à intégration de service de l'abonné mobile, MSISDN, un identifiant international d'abonné mobile, IMSI, et/ou une identité internationale d'équipement mobile, IMEI ;
un identifiant de partie finale, tel qu'un MSISDN, un IMSI et/ou une IMEI ;
des informations d'heure et/ou de date ; et
des données d'emplacement.

13. Dispositif électronique (100) configuré pour réaliser le procédé de l'une quelconque des revendications 1 à 4, 11 ou 12, dans la mesure où les revendications 11 ou 12 sont dépendantes de l'une quelconque des revendications 1 à 4.

14. Serveur configuré pour réaliser le procédé de l'une quelconque des revendications 5 à 10, 11 ou 12, dans la mesure où les revendications 11 ou 12 sont dépendantes de l'une quelconque des revendications 5 à 10.

15. Logiciel informatique comprenant des instructions qui, lorsqu'elles sont exécutées sur un processeur d'un ordinateur, amènent l'ordinateur à réaliser le procédé de l'une quelconque des revendications 1 à 4, 11 ou 12, dans la mesure où les revendications 11 ou 12 sont dépendantes de l'une quelconque des revendications 1 à 4, ou le procédé de l'une quelconque des revendications 5 à 10, 11 ou 12, dans la mesure où les revendications 11 ou 12 sont dépendantes de l'une quelconque des revendications 5 à 10.
